# EUROPÄISCHE PATENTANMELDUNG

(11) **EP 4 089 696 A1**
(43) Veröffentlichungstag der Anmeldung: **16.11.2022**
(21) Anmeldenummer: 22168232.1
(22) Anmeldetag: 13.04.2022
(51) Int. Cl.: H01F 37/00, H01F 38/14, H02J 50/00

(54) **ELEKTRISCHE SPULE, ANGEORDNET IN EINEM ELEKTROMAGNETISCHEN WECHSELFELD ZUM ERZEUGEN VON EIGENBEDARFSTROM**

(30) Priorität: 15.04.2021 DE 102021109474
(71) Anmelder: TenneT TSO GmbH, 95448 Bayreuth (DE)
(72) Erfinder: Löbermann, Matthias, 31515 Wunstorf (DE)
(74) Vertreter: Scheffler, Jörg

(57) **Zusammenfassung**

Elektrische Spule (1), angeordnet in einem elektromagnetischen Wechselfeld zum Erzeugen von Eigenbedarfstrom, wobei das elektromagnetische Wechselfeld durch eine Kompensationsdrossel (3) erzeugt wird.

## Beschreibung

Die Erfindung betrifft eine elektrische Spule, angeordnet in einem elektromagnetischen Wechselfeld zum Erzeugen von Eigenbedarfstrom, wobei das elektromagnetische Wechselfeld durch eine Kompensationsdrossel erzeugt wird.

Der Eigenbedarf an Strom von zum Beispiel Windparks, insbesondere Offshore-Windparks, wird typischerweise mittels Dieselgeneratoren gedeckt. Diese bauraum- und, insbesondere im Betrieb, kostenintensive sowie wenig ressourcenschonende Erzeugung von Eigenbedarfstrom beruht unter anderem darauf, dass die vor Ort regenerativ erzeugte elektrische Leistung sich auf einem hohen Spannungsniveau von typischerweise größer als 50 Kilovolt befindet. Die elektrischen Verbraucher hingegen werden überwiegend mit 230 Volt oder 400 Volt betrieben. Bekannte Spannungswandler im Hochspannungsbereich haben den Nachteil, dass sie bauraum- und kostenintensiv sind.

Der DE 10 2006 043 960 B4 ist ein System zur berührungslosen Energieübertragung zu entnehmen, wobei Verbraucher mittels jeweils zugeordneten Sekundärspulen ausgestattet, induktiv aus einem Primärleitersystem versorgbar sind. Das Primärleitersystem weist hierbei einen Hinleiter und einen Rückleiter auf. Hin- und Rückleiter sind dabei mit je einer Wicklung einer stromkompensierten Drossel des Primärleitersystems verbunden, sodass sich das durch einen Stromfluss durch die beiden Wicklungen der Drossel erzeugte Magnetfeld im Regelbetrieb gegenseitig aufhebt. Zur Detektion von durch im Primärleitersystem auftretendem Fehlerstrom ist an der stromkompensierten Drossel eine Hilfswicklung vorgesehen, in welche bei einem auftretenden Fehlerstrom aufgrund der sich unterschiedlich ausbildenden Magnetfelder eine Spannung induziert wird.

Der DE 17 63 658 B1 ist zudem eine Anordnung zur Dämpfung von Kippschwingungen im Mittelspannungskreis von kapazitiven Spannungswandlern zu entnehmen, wobei dieser in einer Ausführungsform einen bis zu einem möglichen Kurzschlussstrom nicht sättigbaren Transformator aufweist. Zu dessen zweiter Windung ist dabei einerseits ein Kondensator und andererseits eine in Reihe mit einem Widerstand angeordnete Sättigungsdrossel parallelgeschaltet.

Aus der EP 0 571 319 B1 ist ferner ein Stabkern-Stromwandler zur Strommessung durch eine proportionale Umwandlung eines Primärstroms auf einer Hochspannungsebene in einen reduzierten Sekundärstrom nach dem Induktionsprinzip bekannt, bei welchem die Primärwicklung in einem zur Einführung einer Hochspannungsisolation vorhandenen Abstand um die Sekundärwicklung mit gestrecktem Eisenkern angeordnet ist. Ferner ist auch eine vertauschte Anordnung von Primär- und Sekundärwicklung möglich.

Der Erfindung liegt dabei die Aufgabe zugrunde, eine Möglichkeit zu schaffen, auf kleinem Bauraum und kostengünstig aus Hochspannung einen Eigenbedarfstrom im Niederspannungsbereich zu erzeugen.

Diese Aufgabe wird erfindungsgemäß mit einer elektrischen Spule gemäß den Merkmalen des Anspruchs 1 gelöst sowie mit einer Kompensationsdrossel gemäß dem nebengeordneten Anspruch.

Die weitere Ausgestaltung der Erfindung ist den Unteransprüchen zu entnehmen.

Erfindungsgemäß ist also eine elektrische Spule vorgesehen, die in einem elektromagnetischen Wechselfeld angeordnet ist, wobei das elektromagnetische Wechselfeld durch eine Kompensationsdrossel erzeugt wird. Die elektrische Spule befindet sich hierzu zumindest in der Nähe der Kompensationsdrossel, wobei die Kompensationsdrossel zumindest einphasigen Blindstrom oder einphasige Blindleistung, bevorzugt Blindstrom aus regenerativer Energie kompensiert.

Durch die zumindest große Nähe der elektrischen Spule zur Kompensationsdrossel befindet sich die elektrische Spule in einem elektrischen Wechselfeld der Kompensationsdrossel mit großer Stärke, sodass mittels Induktion und Gegeninduktion auch bei geringeren Frequenzen wie beispielweise 50 Hz relativ hohe Leistungen mit einem verhältnismäßig hohen Wirkungsgrad auf die elektrische Spule übertragen werden können, sodass der Eigenstrombedarf, zum Beispiel eines Offshore-Windparks, zumindest zu einem relevanten Teil gedeckt werden kann. Unter großer Nähe wird hierbei ein lichter Abstand zwischen den Wicklungen der Kompensationsdrossel und der elektrischen Spule verstanden, der kleiner als der halbe Spulendurchmesser, bevorzugt kleiner als ein Viertel des Spulendurchmessers ist.

In einer bevorzugten Ausführungsform ist die elektrische Spule innerhalb der Wicklungen der Kompensationsdrossel angeordnet, wobei die elektrische Spule zu den Wicklungen der Kompensationsdrossel bevorzugt parallel ausgerichtet oder weiter bevorzugt koaxial angeordnet ist. Vorteilhafterweise befindet sich die elektrische Spule hierdurch im Bereich des höchsten magnetischen Flusses, wodurch eine hohe elektrische Leistung übertragen werden kann. Eine besonders hohe Leistungsübertragung wird hierbei erreicht, wenn die Wicklungen der elektrischen Spule und der Kompensationsdrossel parallel zueinander ausgerichtet sind oder besonders bevorzugt koaxial zueinander verlaufen.

In einer alternativen Ausführungsform ist die elektrische Spule außerhalb und in der Nähe der Wicklungen der Kompensationsdrossel angeordnet, wobei die elektrische Spule zu den Wicklungen der Kompensationsdrossel bevorzugt parallel, insbesondere koaxial angeordnet ist. Hierdurch wird ein hoher magnetischer Fluss in der elektrischen Spule ermöglicht, insbesondere, wenn die Wicklungen parallel oder koaxial zueinander angeordnet sind. Die Gestaltung der Kompensationsdrossel ist bei dieser Anordnung wenig beeinflusst; sie kann beispielweise einen Eisenkern aufweisen.

Eine besonders praxisrelevante Ausführungsform sieht vor, dass die elektrische Spule im Gehäuse der Kompensationsdrossel angeordnet ist. Hierdurch wird vorteilhafterweise erreicht, dass die elektrische Spule besonders nahe an der Kompensationsdrossel anordenbar ist und auf die Herstellkosten und den Bauraum eines zusätzlichen Gehäuses verzichtet werden kann.

In einer bevorzugten Ausführungsform ist die elektrische Spule zumindest in Teilbereichen relativ zur Wicklung der Kompensationsdrossel beweglich gelagert, sodass das die elektrische Spule durchfließende elektromagnetische Wechselfeld hierdurch veränderbar ist. Die in die elektrische Spule übertragene Leistung ist unabhängig vom Betriebszustand der Kompensationsdrossel veränderbar.

In einer besonders praxisrelevanten Ausführungsform weist die elektrische Spule einen magnetischen Kern, bevorzugt ein Joch auf, der in einer bevorzugten Ausführungsform zumindest teilweise beweglich ist. Durch den weichmagnetischen Kern, aus zum Beispiel einer ferromagnetischen Metalllegierung bestehend, führt der magnetische Fluss zu einer höheren Induktivität in der elektrischen Spule. Durch das Verwenden eines Jochs bei einem U-förmigen weichmagnetischen Kern lässt sich der magnetische Fluss weiter erhöhen und durch Einstellen eines Luftspalts zwischen dem Joch und dem weichmagnetischen Kern besonders effektiv verändern oder anpassen.

In einer bevorzugten Ausführungsform erzeugt die elektrische Spule eine Wechselspannung von zumindest 230 Volt, bevorzugt jedoch von zumindest 400 Volt und weiter bevorzugt von zumindest 1.000 Volt. Hierdurch wird eine Niederspannung erzeugt, die direkt ohne weitere Umspannung den elektrischen Verbrauchern zugeführt werden kann. Eine Wechselstromfrequenz von 50 Hz hat sich hierbei als besonders praxisgerecht erwiesen. Die elektrische Spule koppelt bevorzugt zumindest ein Kilowatt Leistung, bevorzugt zumindest zehn Kilowatt Leistung und weiter bevorzugt mehr als 20 Kilowatt Leistung aus. Hierdurch wird im Niederspannungsbereich eine Leistung zur Verfügung gestellt, die einen Eigenbedarfstrom, zum Beispiel eines Offshore-Windparks, zumindest zu erheblichen Teilen und bevorzugt in Gänze deckt.

Eine bevorzugte Ausführungsform weist eine elektrische Spule auf, die mit einer einphasigen oder mehrphasigen Kompensationsdrossel verwendbar ist, wobei die Kompensationsdrossel zumindest mit einem Kilovolt, bevorzugt mit zumindest zehn Kilovolt und weiter bevorzugt zumindest mit 50 Kilovolt, betreibbar ist. Es kann, auch bei Verwendung einer Hochspannungs-Kompensationsdrossel, auf einen zusätzlichen Spannungswandler verzichtet werden, wenn die elektrische Spule unmittelbar in dem elektromagnetischen Wechselfeld einer Hochspannungs-Kompensationsdrossel anordenbar ist.

Eine besonders praxisrelevante Ausführungsform weist eine elektrische Spule auf, die mittels eines Gleichrichters mit einer Batterie verbunden ist. Hierdurch kann überschüssiger Eigenbedarfstrom zwischengespeichert und bei erhöhtem Eigenstrombedarf den Batterien entnommen werden. Der Bedarf an konventionell bereitgestelltem Eigenbedarfstrom wird weiter verringert.

Die erfindungsgemäße Aufgabe wird des Weiteren mit einer Kompensationsdrossel gelöst, die eine erfindungsgemäße elektrische Spule aufweist, wobei die Wicklungen der Kompensationsdrossel mit Luft oder Öl isoliert sind.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigen in
Fig. 1 eine Schnittansicht einer elektrischen Spule in Wicklungen einer Kompensationsdrossel angeordnet;
Fig. 2 eine Draufsicht einer elektrischen Spule an Wicklungen einer Kompensationsdrossel angeordnet.

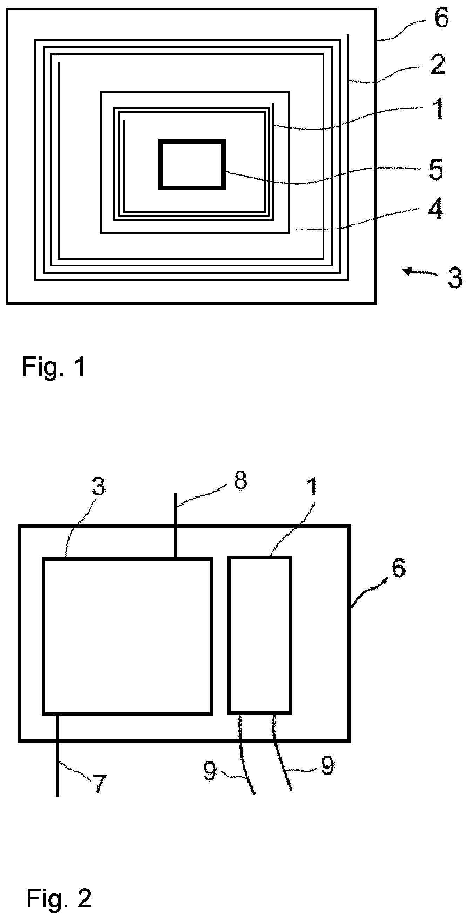

Figur 1 zeigt einen Schnitt einer elektrische Spule 1, die innerhalb und konzentrisch zu den Wicklungen 2 einer Kompensationsdrossel 3 angeordnet ist, wobei zwischen den Wicklungen 2 und der elektrischen Spule 1 eine elektrische Isolierung 4 angeordnet ist, um einen elektrischen Durchschlag zu verhindern. Die elektrische Spule 1, die beispielsweise aus lackisoliertem Kupferdraht besteht, weist einen magnetischen Kern 5, zum Beispiel aus Eisen bestehend, auf. Die Kompensationsdrossel 3 weist des Weiteren ein Gehäuse 6 auf, in dem die zuvor genannten Komponenten angeordnet sind.

In Figur 2 ist eine Draufsicht einer elektrischen Spule 1 dargestellt, die in der Nähe von und konzentrisch zu den Wicklungen 2 einer Kompensationsdrossel 3 in dem Gehäuse 6 der Kompensationsdrossel 3 angeordnet ist. Die Kompensationsdrossel 3 weist eine Hochspannungszuleitung 7 sowie eine Hochspannungsableitung 8 auf. Die elektrische Spule 1 weist zwei Niederspannungsleitungen 9 auf, über die die induzierte Leistung entnommen wird.

### BEZUGSZEICHENLISTE

- 1: elektrische Spule
- 2: Wicklung
- 3: Kompensationsdrossel
- 4: elektrische Isolierung
- 5: magnetischer Kern

- 6: Gehäuse
- 7: Hochspannungszuleitung
- 8: Hochspannungsableitung
- 9: Niederspannungsleitung

## Patentansprüche

1. Elektrische Spule (1), angeordnet in einem elektromagnetischen Wechselfeld zum Erzeugen von Eigenbedarfstrom, **dadurch gekennzeichnet, dass** das elektromagnetische Wechselfeld durch eine Kompensationsdrossel (3) erzeugt wird.

2. Elektrische Spule (1) nach Anspruch 1, **dadurch gekennzeichnet, dass** die elektrische Spule (1) innerhalb der Wicklungen (2) der Kompensationsdrossel (3) angeordnet ist, wobei die elektrische Spule (1) zu den Wicklungen (2) der Kompensationsdrossel (3) bevorzugt parallel ausgerichtet ist und weiter bevorzugt koaxial verläuft.

3. Elektrische Spule (1) nach Anspruch 1, **dadurch gekennzeichnet, dass** die elektrische Spule (1) außerhalb und in der Nähe der Wicklungen (2) der Kompensationsdrossel (3) angeordnet ist, wobei die elektrische Spule (1) zu den Wicklungen (2) der Kompensationsdrossel (3) bevorzugt parallel und weiter bevorzugt koaxial verläuft.

4. Elektrische Spule (1) nach zumindest einem der vorhergehenden Ansprüche, **dadurch gekennzeichnet, dass** die elektrische Spule (1) im Gehäuse (6) der Kompensationsdrossel (3) angeordnet ist.

5. Elektrische Spule (1) nach zumindest einem der vorhergehenden Ansprüche, **dadurch gekennzeichnet, dass** die elektrische Spule (1) zumindest in Teilbereichen relativ zur Wicklung (2) der Kompensationsdrossel (3) beweglich gelagert ist.

6. Elektrische Spule (1) nach zumindest einem der vorhergehenden Ansprüche, **dadurch gekennzeichnet, dass** die elektrische Spule (1) einen magnetischen Kern (5), bevorzugt ein Joch aufweist, der bevorzugt zumindest teilweise beweglich ist.

7. Elektrische Spule (1) nach zumindest einem der vorhergehenden Ansprüche, **dadurch gekennzeichnet, dass** die durch die elektrische Spule (1) erzeugte Wechselspannung zumindest 230 Volt und bevorzugt zumindest 400 Volt beträgt und weiter bevorzugt zumindest ein Kilowatt Leistung auskoppelt und weiter bevorzugt zumindest zehn Kilowatt Leistung auskoppelt.

8. Elektrische Spule (1) nach zumindest einem der vorhergehenden Ansprüche, **dadurch gekennzeichnet, dass** die Kompensationsdrossel (3) einphasig oder mehrphasig ist, wobei die Kompensationsdrossel (3) zumindest mit einem Kilovolt, bevorzugt mit zumindest zehn Kilovolt und weiter bevorzugt zumindest mit 50 Kilovolt betreibbar ist.

9. Elektrische Spule (1) nach zumindest einem der vorhergehenden Ansprüche, **dadurch gekennzeichnet, dass** die elektrische Spule (1) mittels eines Gleichrichters mit einer Batterie verbunden ist.

10. Kompensationsdrossel mit einer elektrischen Spule (1) nach zumindest einem der vorhergehenden Ansprüche, **dadurch gekennzeichnet, dass** die Wicklungen (2) der Kompensationsdrossel (3) mit Luft oder Öl isoliert sind.
